# EUROPÄISCHE PATENTSCHRIFT

(11) **EP 2 213 406 B1**
(45) Veröffentlichungstag und Bekanntmachung des Hinweises auf die Patenterteilung: **30.03.2011**
(21) Anmeldenummer: 09001387.1
(22) Anmeldetag: 02.02.2009
(51) Int. Cl.: B23P 11/00, B29C 65/56, F16B 17/00, G01D 11/24

(54) **Sensorgehäuse**
Sensor casing
Boîtier de capteur

(43) Veröffentlichungstag der Anmeldung: 04.08.2010
(73) Patentinhaber: Pepperl + Fuchs GmbH, 68307 Mannheim (DE)
(72) Erfinder: Langer, Christian, 12623 Berlin (DE); Täubert, Sebastian, 12589 Berlin (DE); Geipel, Jörg, 10249 Berlin (DE)
(74) Vertreter: Müller, Wolf-Christian

(56) Entgegenhaltungen:
- EP-A- 0 863 697
- WO-A-03/006929
- DE-A1-102006 024 767
- GB-A- 1 080 595
- JP-A- 62 251 123
- US-A1- 2005 145 330
- US-A1- 2006 005 643

## Beschreibung

Die Erfindung betrifft ein Verfahren zum Einfügen eines Kunststoffkörpers gemäß dem Oberbegriff des Patentanspruchs 1 und ein Sensorgehäuse gemäß dem Oberbegriff des Patentanspruchs 6.

Das Einfügen von Kunststoffen in ein Metallgehäuse ist in der Technik ein wichtiger Bestandteil, insbesondere in Bereichen in denen eine optische Kontrolle von Fertigungsprozessen notwendig ist. Im Bereich der Lebensmitteltechnik werden an derartige Verbindungen oftmals erhöhte Anforderungen an die physikalischen und chemischen Eigenschaften gestellt, insbesondere muss ein derartiger Verbund hohe Anforderungen hinsichtlich der Zuverlässigkeit, der Dichtheit erfüllen und die entsprechenden Normen einhalten. Weiterhin unterliegen derartige Verbindungen stark wechselnden Temperaturen im Bereich von -40°C bis 120°C und unterliegen Druckschwankungen im Bereich von mehreren Bar. Um diese hohen Anforderungen erfüllen zu können, werden bei herkömmlichen Verfahren die Verbindungsstellen zwischen dem Gehäuse und dem Kunststoffkörper mittels mechanischen Befestigungsmitteln, wie Schrauben und Klammern, und oder chemischen Dichtungsmitteln zumeist in Form von Klebemittel geschützt. Nachteilig ist jedoch, dass die zwischen den Dichtflächen der aneinanderliegenden Seitenflächen des Gehäuserandes und des Kunststoffkörpers eingebrachten Klebemittel und oder Dichtmittel unerwünschte lnhaltstoffe enthalten, die eventuell abgegeben werden und nicht ausreichend alterungsbeständig sind. Andererseits sind mechanische Befestigungsmittel aufwändig in der Herstellung und verursachen vielfältige hygienische Nachteile, insbesondere bei der Reinigung.

Des Weiteren ist es wünschenswert, insbesondere an der Oberfläche an der Schnittstelle zwischen den beiden Materialien einen möglichst ebenen, fugenfreien Übergang auszubilden, um ein Einlagern von Stoffen zu unterdrücken. Im Allgemeinen sind hierzu nach dem Zusammenfügen aufwändige mechanische Nachbearbeitungsschritte notwendig, um die erforderliche Oberflächenbeschaffenheit zu gewährleisten.

Aus der DE 10 2206 024 767 A1 ist ein aufwändiges Verfahren und eine Vorrichtung zum Verbinden eines Kunststoffdeckels mit einem Metallgehäuse bekannt, wobei der Fügeprozess mittels Einbringen von Wärme durchgeführt wird.

Vor diesem Hintergrund besteht die Aufgabe der Erfindung darin ein Verfahren zum Einfügen eines Kunststoffkörpers und ein Sensorgehäuse anzugeben, die jeweils die Nachteile des Standes der Technik verringern.

Die Aufgabe wird durch ein Verfahren zum Einfügen eines Kunststoffkörpers mit den Merkmalen des Patentanspruchs 1 und einem Sensorgehäuse mit den Merkmalen des Patentanspruchs 6 gelöst. Vorteilhafte Ausgestaltungen der Erfindung sind Gegenstand von Unteransprüchen.

Gemäß dem Gegenstand der Erfindung nach Anspruch 1 wird ein Verfahren zum Einfügen eines Kunststoffkörpers in eine Öffnung eines Sensorgehäuses bereitgestellt, wobei die Öffnung eine Seitenfläche mit einem Rand aufweist, indem an dem Rand ein kragenförmiger Wulst und an der Seitenfläche ein schulterförmiger Absatz zur Auflage des Kunststoffkörpers ausgebildet ist, auf dem Absatz vor dem Auflegen des Kunststoffkörpers eine streifenförmige Dichtung eingebracht wird, der Kunststoffkörper auf den Absatz der Seitenfläche derart aufgelegt wird, dass eine Seitenfläche des Kunststoffkörpers mit der Seitenfläche des Sensorgehäuses stoßförmig aneinandergereiht wird, mittels einer Umformung zwischen wenigstens einem Teil der Seitenfläche des Sensorgehäuses und einem Teil der Seitenfläche des Kunststoffkörpers eine formschlüssige elastisch unterstützte Verbindung erzeugt wird, so dass an der Verbindungsstelle auf der Oberseite des Sensorgehäuses und des Kunststoffkörpers ein im Wesentlichen fugenloser und im Wesentlichen stufenfreier Übergang zwischen dem Sensorgehäuse und dem Kunststoffkörper ausgebildet wird.

Gemäß dem Gegenstand der Erfindung nach Anspruch 7 wird ein Sensorgehäuse bereitgestellt, aufweisend eine Öffnung mit einem Rand und einer Seitenfläche die senkrecht zu der Oberfläche des Sensorgehäuses ein rücklaufendes Profil und einen schulterförmigen Absatz ausbildet, eine auf dem Absatz aufliegende streifenförmige Dichtung und ein Kunststoffkörper mit einer Seitenfläche, die teilweise stoßförmig an die Seitenfläche des Sensorgehäuses anliegt, wobei die Unterseite des Kunststoffkörpers teilweise auf der Dichtung aufliegt und eine Verbindungsstelle, welche auf Oberseite des Sensorgehäuses und des Kunststoffkörpers einen im Wesentlichen fugenlosen und im Wesentlichen stufenfreien Übergang zwischen dem Sensorgehäuse und dem Kunststoffkörpers ausbildet.

Ein Vorteil des erfindungsgemäßen Verfahrens ist es, dass zwei unterschiedliche Materialien ohne zusätzliche mechanische oder chemische Befestigungsmittel aneinandergefügt werden können. Ferner wird eine Ausbildung von Fugen und Stufen zumindest an deren Oberflächen unterdrückt. Hierdurch ist es möglich einen klebstofffreien Verbund auszubilden, der weitestgehend undurchlässig für atmosphärische Gase und oder Flüssigkeiten ist. Insbesondere bei einer Anwendung im Lebensmittelbereich unterdrückt die weitgehende Fugenfreiheit der Oberfläche und die Klebstofffreiheit eine unerwünschte Einlagerung von Stoffen oder eine Abgabe von Klebstoffmittel, die die hygienischen oder aseptischen Eigenschaften des Verbundes verschlechtern würden. Ferner wird aufgrund des Umformprozesses in Verbindung mit einer angepassten Profilführung von den beiden Seitenflächen ein stufenloser Übergang zwischen der Oberseite des Sensorgehäuses und der Oberseite des Kunststoffkörpers ohne die bisher notwendigen zusätzlichen Nachbearbeitungsschritte wie beispielsweise Polieren oder Fräsen erzielt.

In einer bevorzugten Weiterbildung des Verfahrens wird mittels der Umformung an der Seitenfläche des Sensorgehäuses ein rücklaufendes Profil ausgebildet, um den Kunststoffkörpers gegenüber dem Sensorgehäuse gegen eine senkrechte Verschiebung zu sichern. Des Weiteren ist es vorteilhaft, dass die Dichtung zwischen dem Sensorgehäuse und dem Kunststoffkörper aus einem elastischen Material wie beispielsweise Viton, Gummi oder Verbundkunststoffen besteht, um einen elastischen Formschluss zu erzeugen, der im Wesentlichen senkrecht zu der Metalloberfläche wirkt. Hierbei ist es vorteilhaft, wenn der äußere Rand des Kunststoffkörpers geeignet angefast wird, um die Ausbildung der hinterschnittenen Seitenfläche des Sensorgehäuses zu begünstigen. Gemäß einer anderen Weiterbildung ist es vorteilhaft, auch die Seitenfläche des Kunststoffkörpers mit einem stufenförmigen Absatz zu versehen. Hierbei wird das Profil des Absatz geeignet gewählt, so dass bei der Umformung nur die Unterseite des Absatzes des Kunststoffkörpers auf der Dichtung aufliegt und wenigstens ein Teil der Unterseite des Kunststoffkörpers zwischen den Rändern des Sensorgehäuses bei dem Umformprozess durchfedern kann.

Durch diese Ausbildung lässt sich, insbesondere unter Verwendung von optisch durchlässigen Kunststoffen, eine Möglichkeit zur Kontrolle von Fertigungsprozessen schaffen, ohne die Sensoren infolge direkten Kontakts mit chemisch oder mechanisch aggressiven Materialien zu beschädigen. Weiterhin ist es durch Wahl geeigneter Kunststoffe möglich, elektrische oder magnetische Felder durch den Kunststoffkörper, der im Allgemeinen scheibenförmig ausgebildet ist, hindurch zusenden oder zu empfangen. Derartige Felder werden nämlich von Metallen im Allgemeinen abgeschirmt.

Untersuchungen der Anmelderin haben gezeigt, dass bei dem erfindungsgemäßen Gehäuse mit einliegendem Kunststoffkörper die Dichtung bevorzugt als elastischer umlaufender Streifen ausgebildet wird. Weiterhin können die elastischen Eigenschaften und die geometrische Ausführung der Dichtung je nach Anforderung und in Abhängigkeit von den bei der Umformung wirkenden Kräfte geeignet gewählt werden.

Die Erfindung wird nachfolgend unter Bezugnahme auf die Zeichnungen näher erläutert. Hierbei werden gleichartige Teile mit identischen Bezeichnungen beschriftet. Darin zeigen die:
- Figur 1: eine schematische Schnittzeichnung durch ein Sensorge- häuse mit aufliegendem Kunststoffkörper im ungefügten Zustand,
- Figur 2: eine schematische Schnittzeichnung im verbundenen Zu- stand, gemäß einer ersten Ausführungsform,
- Figur 3: eine schematische Schnittzeichnung im verbundenen Zu- stand, gemäß einer weiteren Ausführungsform,
- Figur 4: eine Draufsicht auf ein Sensorgehäuse mit eingebettetem Kunststoffkörper im gefügten Zustand.

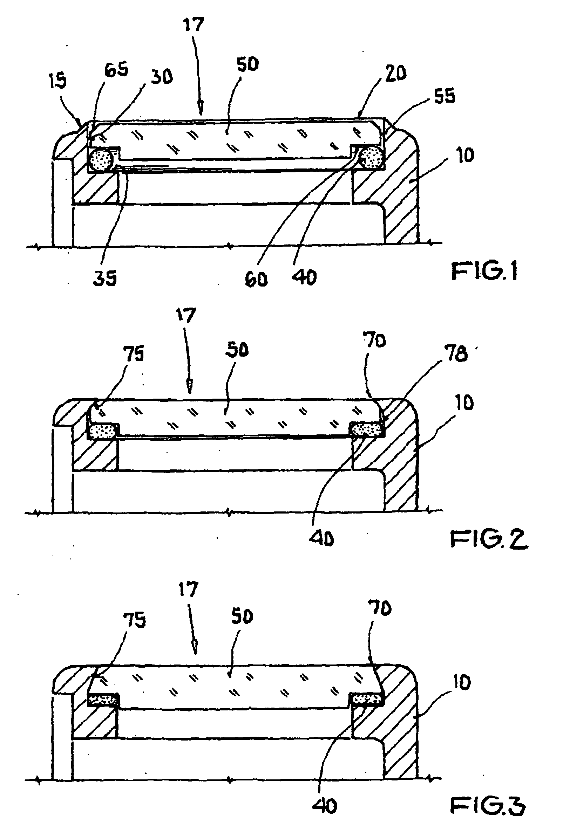

Die Schnittzeichnung der Figur 1 zeigt eine unverbundene Anordnung eines Sensorgehäuses 10 mit einem an einem Rand 20 des Sensorgehäuses 10 ausgebildetem Wulst 15. Des Weiteren weist das Sensorgehäuse 10 eine Seitenfläche 30 mit einem stufenförmigen Absatz 35 auf. Auf dem Absatz 35 liegt eine Dichtung 40 auf. Ferner weist das Sensorgehäuse 10 eine Öffnung 17 mit einem innenliegenden Kunststoffkörper 50 auf. Der Kunststoffkörper 50 weist eine Seitenfläche 55 mit einem stufenförmigen Absatz 60 auf. Ferner ist an dem oberen Rand des Kunststoffkörpers 50 eine Fase 65 ausgebildet. Gemäß der dargestellten Ausführungsform ist die Erstreckung des Absatzes 60 parallel zu der Oberfläche der Kunststoffkörpers 50 etwas größer, als die Erstreckung des Absatzes 35 des Sensorgehäuses 10, das im insbesondere aus Metall ausgebildet ist, gewählt. Dies ist bevorzugt, da dann der Kunststoffkörper beim Einpressen bzw. beim Umformvorgang etwas durchfedern kann. Ferner korrespondiert die Erstreckung des Absatzes 35 in einer Richtung senkrecht zu der Oberfläche mit der Dicke des Absatzes 55 des Kunststoffkörpers 50 und der Dicke der Dichtung 40. Gemäß der dargestellten Ausführungsform sind die Seitenflächen 55 des Kunststoffkörpers 50 und des Sensorgehäuses 10 stoßförmig angeordnet.

In der Figur 2 ist eine erfindungsgemäße Ausführungsform des Sensorgehäuses 10 und des Kunststoffkörpers 50 in einem verbundenen Zustand, d.h. nach Anwendung des Umformverfahrens dargestellt. Hierbei ist die Seitenfläche 30 des Sensorgehäuses 10 mit der Seitenfläche 55 des Kunststoffkörpers 50 weitgehend formschlüssig verbunden. Auf der Oberfläche des Sensorgehäuses 10 ist der Wulst 15, wie in der Figur 1 dargestellt, nicht mehr vorhanden, da das entsprechende Metall des Sensorgehäuses 10 unter Ausbildung eines rücklaufenden Abschnitts 75 der Seitenfläche 30 des Sensorgehäuses 10 einen Formschluss mit der Fase 65 ausbildet. Weiterhin bildet die Oberfläche des Kunststoffkörpers 50 mit der Oberfläche des Sensorgehäuses 10 an der Verbindungsstelle 70 einen stufenlosen und fugenlosen Übergang aus. Durch die Umformung ist die Dichtung 40 elastisch verformt und presst nunmehr den Kunststoffkörper 50 in einer Richtung senkrecht zu der Oberfläche auf den rücklaufenden Abschnitts 75 der Seitenfläche 30 des Sensorgehäuses 10. Des Weite- H 30 ren wird mittels der Dichtung 40 die Seitenfläche 30 gegenüber der Seitenfläche 55 unter Ausbildung eines Spalts 78 abgedichtet. Je nach Größe und Elastizität der umlaufenden Dichtung 40 und in Abhängigkeit der geometrischen Abmessungen der Materialeigenschaften der verwendeten Metall- und Kunststoffflächen, sowie der Geometrie der stufenförmigen Absätze an den Seitenflächen lässt sich sowohl der Anpressdruck des Kunststoffkörpers gegenüber dem Sensorgehäuse, als auch die Größe des Spaltes an der Seitenfläche einstellen. Untersuchungen der Anmelderin haben gezeigt, dass trotz eines vertikalen Spaltes zwischen der Dichtung und der Seitenfläche Sensorgehäuses eine zuverlässige Abdichtung im Bereich des Übergangs zwischen dem Kunststoffkörper und dem Sensorgehäuses gewährleistet ist.

Gemäß der Ausführungsform der Figur 3 zeigt das Schnittbild im Bereich der Seitenflächen 30 des Sensorgehäuses 10 und den Seitenflächen 55 des Kunststoffkörpers 50 einen vollständigen Formschluss zwischen den beiden Flächen. Demgemäß wird von der Dichtung der Raum zwischen dem Absatz 35 und dem Absatz 60 vollständig ausgefüllt.

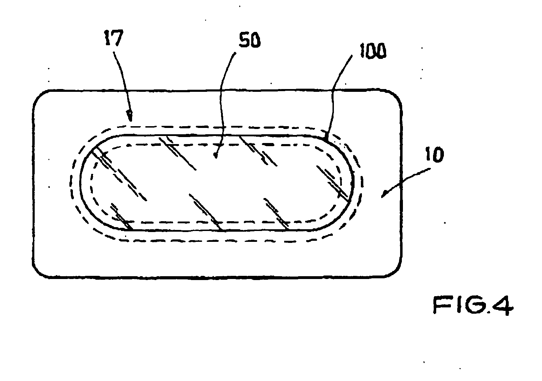

Die Figur 4 zeigt eine Draufsicht auf ein mittels des erfindungsgemäßen Verfahrens hergestelltes Sensorgehäuse 10 und mit eingefügtem Kunststoffkörper 50. An einer Verbindungsstelle 100 bildet das Sensorgehäuse 10 und der Kunststoffkörper 50 einen nahezu fugenfreien und nahezu stufenfreien Übergang aus. Trotz des kleinen Krümmungsradius entlang der Verbindungsstelle 100, ist es durch die entsprechende Duktilität des für das Sensorgehäuse 10 verwendeten Metalls sichergestellt, dass mittels der Umformung auch in den Kantenbereichen auf der Oberfläche ein weitgehend fugenfreier und weitestgehend stufenfreier Übergang ausgebildet wird, ohne dass eine mechanische Nachbehandlung der Oberfläche erforderlich ist. Des Weiteren wird eine zuverlässige, mechanisch belastbare dichte Verbindung ohne die Verwendung von mechanischen oder chemischen Befestigungsmittel bereitgestellt, die besonders für Anwendungen im Bereich der Lebensmitteltechnik geeignet ist.

## Patentansprüche

1. Verfahren zum Einfügen eines Kunststoffkörpers (50) in eine Öffnung (17) eines Sensorgehäuses (10), wobei die Öffnung (17) eine Seitenfläche (30) mit einem Rand (20) aufweist,
**dadurch gekennzeichnet, dass**
an dem Rand (20) ein kragenförmiger Wulst (15) und an der Seitenfläche (30) ein schulterförmiger Absatz (35) zur Auflage des Kunststoffkörpers (50) ausgebildet ist,
auf dem Absatz (35) vor dem Auflegen des Kunststoffkörpers (50) eine streifenförmige Dichtung (40) eingebracht wird,
der Kunststoffkörper (50) auf den Absatz (35) der Seitenfläche (30) des Sensorgehäuses (10) derart aufgelegt wird, dass eine Seitenfläche (55) des Kunststoffkörpers (50) mit der Seitenfläche (30) des Sensorgehäuses (10) stoßförmig aneinandergereiht wird,
mittels Umformung zwischen wenigstens einem Teil der Seitenfläche (30) des Sensorgehäuses (10) und einem Teil der Seitenfläche (55) des Kunststoffkörpers (50) an der Seitenfläche des Sensorgehäuses (10) ein rücklaufendes Profil ausgebildet und eine formschlüssige elastisch unterstützte Verbindung erzeugt wird, so dass an der Verbindungsstelle (100) auf der Oberseite des Sensorgehäuses (10) und des Kunststoffkörpers (50) ein im Wesentlichen fugenloser und im Wesentlichen stufenfreier Übergang zwischen dem Sensorgehäuse (10) und dem Kunststoffkörper (50) ausgebildet wird.

2. Verfahren nach Anspruch 1, **dadurch gekennzeichnet, dass** an der Seitenfläche (55) des Kunststoffkörpers (50) ein stufenförmiger Absatz (60) ausgebildet wird.

3. Verfahren nach einem der Ansprüche 1 oder 2, **dadurch gekennzeichnet, dass** durch die Dichtung (40) zwischen dem Sensorgehäuse (10) und dem Kunststoffkörper (50) ein elastischer Formschluss erzeugt wird, der den Kunststoffkörpers (50) im Wesentlichen senkrecht in Richtung der Oberfläche der Gehäuseoberfläche (10) drückt.

4. Verfahren nach einem der Ansprüche 1 bis 3, **dadurch gekennzeichnet, dass** zwischen dem Sensorgehäuse (10) und dem Kunststoffkörper (50) ein klebstofffreier Verbund ausgebildet wird, der undurchlässig für Flüssigkeiten ist.

5. Verfahren nach einem der Ansprüche 1 bis 3, **dadurch gekennzeichnet, dass** zwischen dem Sensorgehäuse (10) und dem Kunststoffkörper (50) ein klebstofffreier Verbund ausgebildet wird, der undurchlässig für atmosphärische Gase ist.

6. Sensorgehäuse (10), aufweisend
eine Öffnung (17) mit einem Rand (20) und
einer Seitenfläche (30) eines Sensorgehäuses (10) die senkrecht zu der Oberfläche des Sensorgehäuses (10) ein rücklaufendes Profil und einen schulterförmigen Absatz (35) aufweist, **gekennzeichnet durch**
eine auf dem Absatz (35) aufliegende streifenförmige Dichtung (40) und
einen Kunststoffkörper (50) mit einer Seitenfläche (55), die teilweise stoßförmig an die Seitenfläche (30) des Sensorgehäuses (10) anliegt wobei die Unterseite der Kunststoffkörpers (50) teilweise auf der Dichtung (40) aufliegt und eine formschlüssige elastisch unterstützte Verbindung ausbildet,
eine Verbindungsstelle (100), welche auf der Oberseite des Sensorgehäuses (10) und des Kunststoffkörpers (50) einen im Wesentlichen fugenlosen und im Wesentlichen stufenfreien Übergang zwischen dem Sensorgehäuse (10) und dem Kunststoffkörper (50) ausbildet.

7. Sensorgehäuse (10), nach Anspruch 6, **dadurch gekennzeichnet, dass** das Sensorgehäuse (10) eine Öffnung (17) mit einem darin angeordneten Kunststoffkörper (50) aufweist.

8. Sensorgehäuse (10), nach Anspruch 6 oder Anspruch 7, **dadurch gekennzeichnet, dass** die Dichtung (40) als elastischer umlaufender Streifen ausgebildet ist.

9. Sensorgehäuse (10), nach einem der Ansprüche 6 bis 8, **dadurch gekennzeichnet, dass** die Verbindungsstelle (100) einen klebstofffrelen Übergang zwischen der Seitenfläche des Sensorgehäuses (10) und der Seitenfläche des Kunststoffkörpers (50) ausbildet.

## Claims

1. Method of inserting a plastics material body (50) into an opening (17) of a sensor housing (10), wherein the opening (17) has a side surface (30) with an edge (20), **characterised in that** a collar-shaped bead (15) is formed at the edge (20) and a shoulder-shaped step (35) for support of the plastics material body (50) is formed at the side surface (30), a strip-shaped seal (40) is placed on the step (35) before laying the plastics material body (50) thereon, the plastics material body (50) is laid on the step (35) of the side surface (30) of the sensor housing (10) in such a manner that a side surface (55) of the plastics material body (50) is lined up face-to-face with the side surface (30) of the sensor housing (10), by means of deformation between at least a part of the side surface (30) of the sensor housing (10) and a part of the side surface (55) of the plastics material body (50) a return profile is formed at the side surface of the sensor housing (10) and a mechanically positive resiliently supported connection is produced so that a substantially gapless and substantially step-free transition between the sensor housing (10) and the plastics material body (50) is formed at the connecting point (100) on the upper side of the sensor housing (10) and the plastics material body (50).

2. Method according to claim 1, **characterised in that** a step-shaped offset (60) is formed at the side surface (55) of the plastics material body (50).

3. Method according to one of claims 1 and 2, **characterised in that** a resilient mechanically positive coupling, which presses the plastics material body (50) substantially perpendicularly in the direction of the surface of the housing surface (10), is produced by the seal (40) between the sensor housing (10) and the plastics material body (50).

4. Method according to any one of claims 1 to 3, **characterised in that** an adhesive-free bond, which is impermeable to liquids, is formed between the sensor housing (10) and the plastics material body (50).

5. Method according to any one of claims 1 to 3, **characterised in that** an adhesive-free bond, which is impermeable to atmospheric gases, is formed between the sensor housing (10) and the plastics material body (50).

6. Sensor housing (10) having an opening (17) with an edge (20) and a side surface (30) of a sensor housing (10), which perpendicularly to the surface of the sensor housing (10) has a return profile and a shoulder-shaped step (35), **characterised by** a strip-shaped seal (40) which is placed on the step (35) and a plastics material body (50) with a side surface (55), which bears partly face-to-face against the side surface (30) of the sensor housing (10), wherein the underside of the plastics material body (50) rests partly on the seal (40) and forms a mechanically positive, resiliently supported connection, a connecting point (100), which forms on the upper side of the sensor housing (10) and the plastics material body (50) a substantially gapless and substantially step-free transition between the sensor housing (10) and the plastics material body (50).

7. Sensor housing (10) according to claim 6, **characterised in that** the sensor housing (10) has an opening (17) with a plastics material body (50) arranged therein.

8. Sensor housing (10) according to claim 6 or claim 7, **characterised in that** the seal (40) is formed as a resilient encircling strip.

9. Sensor housing (10) according to any one of claims 6 to 8, **characterised in that** the connecting point (100) forms an adhesive-free transition between the side surface of the sensor housing (10) and the side surface of the plastics material body (50).

## Revendications

1. Procédé pour insérer un corps en matière synthétique (50) dans une ouverture (17) d'un boîtier de capteur (10), dans lequel l'ouverture (17) présente un chant (30) présentant un bord (20),
**caractérisé en ce que**
. l'on conforme une nervure en collerette (15) sur le bord (20) et un décrochement (35) en forme d'épaulement sur le chant (30) pour la pose du corps en matière synthétique (50),
l'on place un joint (40) en forme de bande sur le décrochement (35) avant la pose du corps en matière synthétique (50),
. le corps en matière synthétique (50) étant déposé sur le décrochement (35) du chant (30) du boîtier de capteur (10) de manière à ce qu'un chant (55) du corps en matière plastique (50) soit en contact de poussée d'alignement avec le chant (30) du boîtier de capteur (10),
. l'on conforme par un procédé de formage sur le chant du boîtier de capteur (10) un profil dorsal entre au moins une partie du chant (30) du boîtier de capteur (10) et une partie du chant (55) du corps en matière synthétique (50) et on réalise une liaison élastique de soutien à ajustement de forme de façon que la zone de liaison (100) sur la face supérieure du boîtier de capteur (10) et le corps en matière synthétique (50) présente une jonction entre le boîtier de capteur (10) et le corps en matière synthétique essentiellement sans joint et sans variation de niveau.

2. Procédé selon la revendication 1 **caractérisé en ce que** le chant (55) du corps en matière synthétique (50) présente un décrochement (60) en gradin.

3. Procédé selon l'une des revendications 1 ou 2 **caractérisé en ce que** par le joint (40) entre le boîtier de capteur (10) et le corps en matière synthétique (50) est crée un ajustement de forme à effet élastique qui presse le corps en matière élastique (50) sensiblement perpendiculairement en direction de la face supérieure du dessus du boîtier de capteur.

4. Procédé selon l'une quelconque des revendications de 1 à 3 **caractérisé en ce qu'**entre le boîtier de capteur (10) et le corps en matière synthétique (50) est formée une liaison exempte de colle, étanche aux liquides.

5. Procédé selon l'une quelconque des revendications de 1 à 3 **caractérisé en ce qu'**entre le boîtier de capteur (10) et le corps en matière synthétique (50) est formée une liaison exempte de colle, étanche aux gaz atmosphériques.

6. Boîtier de capteur présentant
une ouverture (17) avec un bord (20) et un chant (30) d'un boîtier de capteur (10) qui présente perpendiculairement à la surface supérieure du boîtier de capteur un profil dorsal et un décrochement (35)
**caractérisé par**
. un joint en bande (40) posé sur le décrochement (35) et un corps en matière synthétique (50) présentant un chant (55) qui contacte partiellement en front de poussée le chant (30) du boîtier de capteur (10) dans lequel la sous face du corps en matière synthétique (50) repose partiellement sur le joint (40) et présente une liaison élastique de soutien à ajustement de forme,
. une zone de liaison (100) qui présente une jonction sensiblement sans joint et sans variation de niveau sur la face supérieure du boîtier de capteur (10) et du corps en matière synthétique (50) entre le boîtier de capteur (10) et le corps en matière synthétique (50).

7. Boîtier de capteur (10) selon la revendication 6 **caractérisé en ce que** le boîtier de capteur présente une ouverture (17) dans laquelle est agencé le corps en matière synthétique.

8. Boîtier de capteur (10) selon la revendication 6 ou 7 **caractérisé en ce que** le joint (40) est conformé en bandes périphériques élastiques.

9. Boîtier de capteur (10) selon l'une des revendications 6 à 8 **caractérisé en ce que** la zone de liaison (100) présente une jonction sans colle entre le chant du boîtier de capteur (10) et le chant du corps en matière synthétique (50).
